(19) Europäisches Patentamt / European Patent Office / Office européen des brevets

(11) **EP 4 442 659 A1**

(12) **EUROPEAN PATENT APPLICATION**
published in accordance with Art. 153(4) EPC

(43) Date of publication:
**09.10.2024 Bulletin 2024/41**

(21) Application number: **22898682.4**

(22) Date of filing: **28.11.2022**

(51) International Patent Classification (IPC):
**C03C 3/32** $^{(2006.01)}$  **C03C 4/10** $^{(2006.01)}$
**G02B 1/00** $^{(2006.01)}$

(52) Cooperative Patent Classification (CPC):
**C03C 3/32; C03C 4/10; G02B 1/00**

(86) International application number:
**PCT/JP2022/043698**

(87) International publication number:
**WO 2023/095900 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2021 JP 2021193037**

(71) Applicant: **Nippon Electric Glass Co., Ltd.**
**Otsu-shi, Shiga 520-8639 (JP)**

(72) Inventors:
• **IWANAGA Motoshi**
  **Otsu-shi Shiga 520-8639 (JP)**
• **MATSUSHITA Yoshimasa**
  **Otsu-shi Shiga 520-8639 (JP)**
• **SATO Fumio**
  **Otsu-shi Shiga 520-8639 (JP)**

(74) Representative: **Hoffmann Eitle**
**Patent- und Rechtsanwälte PartmbB**
**Arabellastraße 30**
**81925 München (DE)**

(54) **INFRARED-TRANSMITTING GLASS**

(57) To provide an infrared transmitting glass that is easy to vitrify, has excellent thermal stability, and can achieve desired optical properties. An infrared transmitting glass contains: in mol%, from 25% to 90% of S+Se+Te, from 0.1% to 30% of Sn, from 0.1% to 15% of Ag, and from 1% to 30% of Ge+Sn, in which (Ge+Sn)/(S+Se+Te) is 0.3 or less.

**EP 4 442 659 A1**

**Description**

TECHNICAL FIELD

The present invention relates to an infrared transmitting glass.

BACKGROUND ART

Development of an infrared camera for use in in-vehicle night vision, security systems, or the like is progressing. The infrared camera is designed by combining optical elements such as a filter and a lens that transmit infrared rays.

Materials such as germanium (Ge) and silicon (Si) are often used for the above optical elements. However, Ge is an expensive material and is disadvantageous for reducing the cost of optical elements. In addition, Si has a lower internal transmittance than Ge in an infrared region, which is disadvantageous for improving the performance of the infrared camera.

Therefore, various chalcogenide glasses have been proposed as materials to replace Ge and Si (Patent Literature 1).

CITATION LIST

PATENT LITERATURE

Patent Literature 1: WO2017/086227

SUMMARY OF INVENTION

TECHNICAL PROBLEM

The optical elements such as a lens are often used by correcting aberrations by combining a plurality of materials having different optical constants. Therefore, for infrared transmitting materials, particularly chalcogenide glasses, a novel chalcogenide glass having desired optical properties is required from the viewpoint of improving the degree of freedom in correcting aberrations. In addition, from the viewpoint of improving manufacturing stability, a chalcogenide glass that is easy to vitrify and has excellent thermal stability is required.

In view of the above, an object of the present invention is to provide an infrared transmitting glass that is easy to vitrify, has excellent thermal stability, and can achieve desired optical properties.

SOLUTION TO PROBLEM

Hereinafter, each aspect of an infrared transmitting glass that solves the above problems will be described.

An infrared transmitting glass according to Aspect 1 contains: in mol%, from 25% to 90% of S+Se+Te, from 0.1% to 30% of Sn, from 0.1% to 15% of Ag, and from 1% to 30% of Ge+Sn, in which (Ge+Sn)/(S+Se+Te) is 0.3 or less.

An infrared transmitting glass according to Aspect 2 is based on Aspect 1, and preferably further contains: in mol%, from 0.1% to 30% of Ge.

An infrared transmitting glass according to Aspect 3 is based on Aspect 1 or Aspect 2, and preferably further contains: in mol%, from 0.1% to 50% of Ga+Sb+Bi.

An infrared transmitting glass according to Aspect 4 is based on any one of Aspect 1 to Aspect 3, and preferably further contains: in mol%, from 0.1% to 25% of Ga.

An infrared transmitting glass according to Aspect 5 is based on any one of Aspect 1 to Aspect 4, in which Ga/(S+Se+Te) is preferably 2 or less.

An infrared transmitting glass according to Aspect 6 is based on any one of Aspect 1 to Aspect 5, and preferably further contains: in mol%, from 0% to 20% of F+Cl+Br+I.

An infrared transmitting glass according to Aspect 7 is based on any one of Aspect 1 to Aspect 6, and is preferably substantially free of Se and As. In the present description, "being substantially free of" means that it is not intentionally contained in a raw material, and does not exclude the possibility of contamination at the level of impurities. Objectively, the content of each component is less than 0.1 mol%.

An infrared transmitting glass according to Aspect 8 is based on any one of Aspect 1 to Aspect 7, in which an Abbe number is preferably 250 or less.

An infrared transmitting glass according to Aspect 9 is based on any one of Aspect 1 to Aspect 8, in which a refractive index at a wavelength of 10 $\mu$m is preferably 2.5 or more.

An infrared transmitting glass according to Aspect 10 is based on any one of Aspect 1 to Aspect 9, in which an internal transmittance at a wavelength of 10 $\mu$m is preferably 70% or more. The "internal transmittance" refers to a light transmittance excluding a surface reflection loss on an incident side and an emission side of a sample. In addition, the "internal transmittance" in the present invention refers to an internal transmittance at a thickness of 2 mm, and is specifically calculated based on a measured value of a light transmittance including surface reflection losses at thicknesses of 2 mm and 6 mm.

An infrared transmitting glass according to Aspect 11 is based on any one of Aspect 1 to Aspect 10, in which a volume resistivity at room temperature is preferably $10^{2.0}$ (Qcm) or more.

An optical element according to Aspect 12 contains the infrared transmitting glass according to any one of Aspect 1 to Aspect 11.

An infrared camera according to Aspect 13 includes the optical element according to Aspect 12.

ADVANTAGEOUS EFFECTS OF INVENTION

According to the present invention, it is possible to provide an infrared transmitting glass that is easy to vitrify, has excellent thermal stability, and can achieve desired optical properties.

DESCRIPTION OF EMBODIMENTS

An infrared transmitting glass according to the present invention contains: in mol%, from 25% to 90% of S+Se+Te, from 0.1% to 30% of Sn, from 0.1% to 15% of Ag, and from 1% to 30% of Ge+Sn, in which (Ge+Sn)/(S+Se+Te) is 0.3 or less. The reason why the glass composition is defined in this way and the content of each component will be described below. Note that, in the following description, "%" means "mol%" unless otherwise specified. In addition, in the present invention, "x+y+z+..." means the total content of respective components. Here, each component does not necessarily have to be contained as an essential component, and there may be components that are not contained (content: 0%). In addition, "from A% to B% of x+y+z+..." includes, for example, "x=0%, from A% to B% of y+z+..." or "x=0%, y=0%, from A% to B% of z+...". In the present invention, "x/y" refers to a value obtained by dividing the content of the component x by the content of the component y.

S, Se, and Te are components that form the glass network. The content of S+Se+Te (total amount of S, Se, and Te) is from 25% to 90%, preferably from 30% to 89%, from 40% to 89%, from 50% to 85%, from 50% to 82%, and particularly preferably from 50% to 80%. When the content of S+Se+Te is too small, the vitrification becomes difficult. When the content of S+Se+Te is too large, S-based, Se-based, or Te-based crystals precipitate, and the internal transmittance tends to decrease. Note that, the preferred range of the content of each component is as follows.

The content of S is preferably from 0% to 90%, from 10% to 90%, from 20% to 89%, from 30% to 89%, from 40% to 88%, from 50% to 88%, from 50% to 80%, and particularly preferably from 50% to 75%. However, S is a component that tends to decrease the internal transmittance at a wavelength of 10 $\mu$m or more. Therefore, from the viewpoint of enhance the internal transmittance in the infrared region, the content of S is preferably 30% or less, 20% or less, 10% or less, 5% or less, 3% or less, and particularly preferably 1% or less.

The content of Se is preferably from 0% to 90%, from 10% to 90%, from 20% to 89%, from 30% to 89%, from 40% to 88%, from 50% to 88%, from 50% to 80%, and particularly preferably from 50% to 75%. However, Se is a toxic component. Therefore, from the viewpoint of reducing the burden on the environment, the content of Se is preferably 40% or less, 30% or less, 20% or less, 10% or less, 5% or less, 3% or less, and 1% or less, and it is particularly preferable that Se is substantially not contained.

The content of Te is preferably from 0% to 90%, from 1% to 90%, from 10% to 90%, from 20% to 89%, from 30% to 89%, from 40% to 88%, from 50% to 88%, from 50% to 80%, and particularly preferably from 50% to 75%. When the content of Te is too large, the vitrification becomes difficult. In addition, Te-based crystals precipitate and the internal transmittance tends to decrease. Further, the volume resistivity tends to decrease.

Note that, it is sufficient that at least one component among S, Se, and Te is contained. From the viewpoint of enhancing the internal transmittance in a wavelength range of 10 $\mu$m or more, it is particularly preferable that the glass contains at least Te. When Te is contained, it becomes easier to set an infrared absorption edge wavelength, to be described later, to 20 $\mu$m or more.

Sn is a component that tends to decrease the Abbe number and to increase the refractive index of the glass material. The content of Sn is from 0.1% to 30%, preferably from 0.1% to 28%, from 0.1% to 26%, from 0.3% to 26%, from 0.3% to 24%, and particularly preferably from 0.5% to 22%. When the content of Sn is too small, the Abbe number tends to increase. When the content of Sn is too large, the vitrification becomes difficult. Note that, from the viewpoint of particularly enhancing the internal transmittance, the content of Sn is preferably 20% or less, 15% or less, 12% or less, 10% or less, 8% or less, and particularly preferably 5% or less.

The content of Te+Sn (total amount of Te and Sn) is preferably from 0.1% to 99%, from 1% to 99%, from 10% to 99%, from 20% to 99%, from 30% to 99%, from 30% to 95%, and particularly preferably from 30% to 90%. When Te+Sn is too small, the vitrification becomes difficult. When Te+Sn is too large, the internal transmittance tends to decrease.

Ag is a component that expands the vitrification range and that easily enhances the thermal stability of the glass. It is also a component that tends to enhance the internal transmittance of the glass. The content of Ag is from 0.1% to 15%, preferably from 0.1% to 14%, from 0.3% to 14%, and particularly preferably from 0.5% to 14%. When the content of Ag is too small, the internal transmittance of the glass tends to decrease. When the content of Ag is too large, the vitrification becomes difficult.

The content of Sn+Ag (total amount of Sn and Ag) is preferably from 1% to 30%, from 1% to 28%, from 1% to 25%, from 3% to 25%, and particularly preferably from 3% to 23%. When Sn+Ag satisfies the above value, the vitrification becomes easier. When the content of Sn+Ag is too small, the vitrification range tends to be narrower, and the Abbe number tends to increase. When the content of Sn+Ag is too large, the vitrification becomes difficult. Note that, from the viewpoint of particularly enhancing the internal transmittance, the upper limit of the content of Sn+Ag is preferably 20% or less, 15% or less, 12% or less, 10% or less, 8% or less, and particularly preferably 5% or less.

From the viewpoint of increasing the refractive index and decreasing the Abbe number of the glass material, Sn/(Sn+Ag) is preferably 0.01 or more, 0.1 or more, 0.2 or more, and particularly preferably 0.3 or more. On the other hand, when Sn/(Sn+Ag) is too large, the vitrification becomes difficult. In addition, the volume resistivity tends to decrease, and the internal transmittance tends to decrease. Therefore, the upper limit thereof is preferably 0.99 or less, and particularly preferably 0.98 or less.

From the viewpoint of increasing the volume resistivity and enhancing the internal transmittance of the glass material, Ag/(Sn+Ag) is preferably 0.01 or more, 0.1 or more, 0.2 or more, and particularly preferably 0.25 or more. On the other hand, when Ag/(Sn+Ag) is too large, the refractive index tends to decrease and the Abbe number tends to increase. Therefore, the upper limit thereof is preferably 0.99 or less, 0.9 or less, 0.8 or less, and particularly preferably 0.75 or less.

Ge is a component that forms the glass network. The content of Ge is preferably from 0% to 30%, from 0.1% to 30%, from 0.1% to 25%, from 0.3% to 25%, from 0.3% to 24%, and particularly preferably from 0.5% to 22%. When the content of Ge is too large, the internal transmittance tends to decrease. In addition, the raw material cost tends to increase.

The content of Ge+Sn (total amount of Ge and Sn) is from 1% to 30%, preferably from 1% to 28%, from 1% to 26%, from 3% to 25%, from 3% to 24%, from 5% to 24%, and particularly preferably from 7% to 23%. When Ge+Sn satisfies the above value, the vitrification becomes easier. Note that, from the viewpoint of stabilizing the vitrification, it is preferable to contain both Ge and Sn components in an amount of 0.1% or more, 0.3% or more, and particularly 0.5% or more.

(Ge+Sn)/(S+Se+Te) is preferably 0.3 or less, 0.29 or less, 0.28 or less, and particularly preferably 0.25 or less. When (Ge+Sn)/(S+Se+Te) satisfies the above value, the vitrification becomes easier. The lower limit is, for example, 0.04 or more.

Note that, in the case of containing Te as an essential component, (Ge+Sn)/Te is preferably 0.3 or less, 0.29 or less, 0.28 or less, and particularly preferably 0.25 or less. When (Ge+Sn)/Te satisfies the above value, the vitrification becomes easier. The lower limit is, for example, 0.04 or more.

The infrared transmitting glass according to the present invention may contain the following optional components in addition to the above components.

Ga, Sb, and Bi are components that expand the vitrification range and that easily enhance the thermal stability of the glass. The content of Ga+Sb+Bi (total amount of Ga, Sb, and Bi) is preferably from 0% to 50%, from 0.1% to 50%, from 0.3% to 40%, from 0.5% to 30%, and particularly preferably from 1% to 30%. When the content of Ga+Sb+Bi is too large, the vitrification becomes difficult. Note that, the content of each component of Ga, Sb, and Bi is preferably from 0% to 50%, from 0.1% to 50%, from 0.1% to 40%, from 0.1% to 30%, from 0.1% to 25%, from 0.3% to 25%, from 0.5% to 25%, and particularly preferably from 1% to 25%. In addition, from the viewpoint of facilitating the vitrification, it is particularly preferable that Ga is contained.

Ga/(S+Se+Te) is preferably 2 or less, 1.9 or less, 1.8 or less, 1.5 or less, 1 or less, 0.7 or less, and particularly preferably 0.5 or less. In addition, it is preferably 0 or more, 0.04 or more, 0.05 or more, and particularly preferably 0.1 or more. When Ga/(S+Se+Te) satisfies the above value, the vitrification becomes easier.

Note that, in the case of containing Te as an essential component, Ga/Te is preferably 2 or less, 1.9 or less, 1.8 or less, 1.5 or less, 1 or less, 0.7 or less, and particularly preferably 0.5 or less. In addition, it is preferably 0 or more, 0.04 or more, 0.05 or more, and particularly preferably 0.1 or more. When Ga/Te satisfies the above value, the vitrification becomes easier.

The content of Ge+Ga (total amount of Ge and Ga) is preferably from 0% to 60%, from 0.1% to 60%, from 0.1% to 55%, and particularly preferably from 0.5% to 55%. When Ge+Ga satisfies the above value, the vitrification becomes easier, and it becomes easier to enhance the thermal stability of the glass. When the content of Ge+Ga is too large, Ge-based or Ga-based crystals precipitate, and the internal transmittance tends to decrease. Note that, from the viewpoint of stabilizing the vitrification, it is preferable to contain both Ge and Ga components in an amount of 0.1% or more.

(Ge+Ga)/(S+Se+Te) is preferably 2 or less, 1.9 or less, 1.8 or less, 1.5 or less, 1.2 or less, and particularly preferably 1 or less. In addition, it is preferably 0.04 or more, 0.05 or more, and particularly preferably 0.1 or more. When (Ge+Ga)/(S+Se+Te) satisfies the above value, the vitrification becomes easier.

Note that, in the case of containing Te as an essential component, (Ge+Ga)/Te is preferably 2 or less, 1.9 or less, 1.8 or less, 1.5 or less, 1.2 or less, and particularly preferably 1 or less. In addition, it is preferably 0.04 or more, 0.05 or more, and particularly preferably 0.1 or more. When (Ge+Ga)/Te satisfies the above value, the vitrification becomes easier.

From the viewpoint of particularly enhancing the internal transmittance, Bi/(Ga+Sb+Bi) is preferably less than 1, 0.5 or less, 0.3 or less, and particularly preferably 0.1 or less.

F, Cl, Br, and I are components that expand the vitrification range and that easily enhance the thermal stability of the glass. They are also components that tend to enhance the internal transmittance. The content of F+Cl+Br+I (total amount of F, Cl, Br, and I) is preferably from 0% to 20%, from 0% to 15%, from 0% to 10%, from 0% to 5%, from 0% to 4%, from 0% to 3%, from 0% to 2%, from 0% to 1%, and particularly preferably from 0.1% to 1%. When the content of F+Cl+Br+I is too large, the vitrification becomes difficult. In addition, the weather resistance tends to decrease. The content of Cl+I (total amount of Cl and I) is preferably from 0% to 20%, from 0% to 15%, from 0% to 10%, from 0% to 5%, from 0% to 4%, from 0% to 3%, from 0% to 2%, from 0% to 1%, and particularly preferably from 0.1% to 1%. Note that, the content of each component of F, Cl, Br, and I is preferably from 0% to 20%, from 0% to 15%, from 0% to 10%, from 0% to 5%, from 0% to 4%, from 0% to 3%, from 0% to 2%, from 0% to 1%, and particularly preferably from 0.1% to 1%.

Al and Si are components that form the glass network, that decrease the Abbe number, and that tend to enhance dispersion of the glass. The content of Al+Si (total amount of Al and Si) is preferably from 0% to 50%, from 0% to 40%, from 0% to 30%, from 0% to 20%, from 0% to 15%, and particularly preferably from 0% to 10%. When the content of Al+Si is too large, the internal transmittance tends to decrease. Note that, the content of each component of Al and Si is preferably from 0% to 50%, from 0% to 40%, from 0% to 30%, from 0% to 20%, from 0% to 15%, and particularly preferably from 0% to 10%.

Zn, In, and Cu are components that expand the vitrification range and that easily enhance the thermal stability of the glass. The content of Zn+In+Cu (total amount of Zn, In, and Cu) is preferably from 0% to 50%, from 0% to 40%, from 0% to 30%, from 0% to 25%, from 0% to 20%, from 0% to 15%, from 0% to 12%, from 0% to 10%, and particularly preferably from 0% to 5%. When the content of Zn+In+Cu is too large, the vitrification becomes difficult. Note that, the content of each component of Zn, In, and Cu is preferably from 0% to 50%, from 0% to 40%, from 0% to 30%, from 0% to 25%, from 0% to 20%, from 0% to 15%, from 0% to 12%, from 0% to 10%, and particularly preferably from 0% to 5%.

B, C, Cr, Mn, Ti, Fe, or the like may be contained. The content of B+C+Cr+Mn+Ti+Fe (total amount of B, C, Cr, Mn, Ti, and Fe) is preferably from 0% to 40%, from 0% to 30%, from 0% to 20%, from 0% to 10%, from 0% to 5%, from 0% to 1%, and particularly preferably from 0% to less than 1%. When the content of these components is too large, it may be difficult to obtain desired optical properties. Note that, the content of each component of B, C, Cr, Mn, Ti, and Fe is preferably from 0% to 10%, from 0% to 5%, from 0% to 1%, and particularly preferably from 0% to less than 1%.

As is a component that enhances the thermal stability of the glass. However, since As is a toxic component, from the viewpoint of reducing the burden on the environment, the content of As is preferably 30% or less, 25% or less, 20% or less, 10% or less, 5% or less, and 1% or less, and it is particularly preferable that As is substantially not contained.

Note that, from the viewpoint of particularly reducing the burden on the environment, it is particularly preferable that Se and As are substantially not contained.

It is preferable that Cd, Tl, and Pb are substantially not contained. Accordingly, the environmental impact can be minimized.

The infrared transmitting glass according to the present invention has a refractive index (n10) at a wavelength of 10 $\mu$m of preferably 2.5 or more, 2.8 or more, 3.0 or more, 3.1 or more, and particularly preferably 3.2 or more. By using an infrared transmitting glass having such a refractive index, it is possible to manufacture an optical element that exhibits a relatively high refractive index in the infrared wavelength region. The upper limit of the refractive index is not particularly limited, and is realistically less than 4.5.

The infrared transmitting glass according to the present invention has an Abbe number (v10) at a wavelength of 10 $\mu$m of preferably 250 or less, 240 or less, and particularly preferably 230 or less. By using an infrared transmitting glass having such an Abbe number, it is possible to manufacture an optical element that exhibits relatively high dispersion in the infrared wavelength region. The lower limit of the Abbe number is not particularly limited, and is realistically 100 or more.

The infrared transmitting glass according to the present invention has an infrared absorption edge wavelength of preferably 20 $\mu$m or more, 21 $\mu$m or more, 23 $\mu$m or more, 25 $\mu$m or more, and particularly preferably 26 $\mu$m or more. The larger the infrared absorption edge wavelength is, the more infrared rays on the longer wavelength side can be transmitted. Here, the infrared absorption edge wavelength means the longest wavelength in the long wavelength side in the infrared region with a wavelength of 1 μm or more, at which the internal transmittance is 10% at a thickness of 2 mm.

The infrared transmitting glass according to the present invention has an internal transmittance at a wavelength of 10 μm of preferably 70% or more, 75% or more, 85% or more, 90% or more, 92% or more, 94% or more, 96% or more, and particularly preferably 98% or more. By using an infrared transmitting glass having such an internal transmittance, it is possible to manufacture an optical element that exhibits a relatively high transmittance in the infrared wavelength region. The upper limit of the internal transmittance is not particularly limited, and is realistically less than 99.99%.

The infrared transmitting glass according to the present invention has a volume resistivity at room temperature of preferably $10^{2.0}$ (Ωcm) or more, $10^{2.5}$ (Ωcm) or more, $10^{3.0}$ (Ωcm) or more, $10^{3.4}$ (Ωcm) or more, $10^{3.6}$ (Ωcm) or more, $10^{3.8}$ (Ωcm) or more, $10^{4.0}$ (Ωcm) or more, $10^{4.2}$ (Ωcm) or more, and particularly preferably $10^{4.4}$ (Ωcm) or more. When the volume resistivity decreases, absorption of infrared light (hereinafter referred to as electron absorption) resulting from the vibration of free electrons in the glass tends to occur, and the internal transmittance in the infrared region tends to decrease. Note that, the volume resistivity can be calculated, for example, by measuring the resistance between electrodes provided on both surfaces of a sample having a thickness of 2 mm, and using the following equation based on the obtained resistance value, the sample thickness, and the electrode area. For example, an Al electrode can be used as the electrode.

$$\text{Volume resistivity (Ωcm)} = \text{resistance value (Ω) between electrodes} \times \text{electrode area (cm}^2\text{)/sample thickness (cm)}$$

The infrared transmitting glass according to the present invention has a glass transition temperature Tg of preferably 200°C or lower, 180°C or lower, 170°C or lower, and particularly preferably 160°C or lower. By using an infrared transmitting glass having such a glass transition temperature, forming (for example, press forming) can be performed at a relatively low temperature, so that it becomes easier to manufacture an optical element. The lower limit of the glass transition temperature Tg is not particularly limited, and is realistically 100°C or higher.

The infrared transmitting glass according to the present invention has a temperature difference ΔT between the glass transition temperature Tg and a crystallization temperature Tc of preferably 70°C or higher, and particularly preferably 71°C or higher. By using an infrared transmitting glass having such ΔT, devitrification during forming is less likely to occur, making it easier to stably manufacture an optical element. The upper limit of ΔT is not particularly limited, and is, for example, 500°C or lower.

The infrared transmitting glass according to the present invention can be prepared, for example, as follows. First, raw materials are mixed to have a desired composition. Next, the mixed raw materials are charged into a quartz glass ampoule that has been heated and evacuated, and the ampoule is sealed with an oxygen burner while being evacuated. Next, the sealed quartz glass ampoule is held at about 650°C to 1000°C for 6 hours to 12 hours. Thereafter, rapid cooling to room temperature is performed, and thereby an infrared transmitting glass can be obtained.

As the raw materials, elemental raw materials (Ge, Ga, Si, Te, Ag, I, or the like) may be used, or compound raw materials (GeTe$_4$, Ga$_2$Te$_3$, AgI, or the like) may be used. Further, these may be used in combination.

An optical element can be prepared by processing the obtained infrared transmitting glass into a predetermined shape (disk shape, lens shape, or the like). Examples of the optical element include a lens, a filter, and a prism.

For the purpose of enhancing the internal transmittance, an antireflection film may be formed on one or both surfaces of the optical element. Examples of a method for forming the antireflection film include vacuum evaporation, ion plating, and sputtering.

After forming the antireflection film on the infrared transmitting glass, it may be processed into a predetermined shape. However, since the antireflection film is likely to peel off during processing steps, unless there are special circumstances, it is preferable to form the antireflection film after processing the infrared transmitting glass into a predetermined shape.

EXAMPLES

Hereinafter, the present invention will be described based on Examples, but the present invention is not limited to these Examples.

Tables 1 to 5 show Examples 1 to 30 of the present invention and Comparative Examples 1 to 3.

[Table 1]

| | | Example 1 | Example 2 | Example 3 | Example 4 | Example 5 | Example 6 | Example 7 |
|---|---|---|---|---|---|---|---|---|
| Glass composition (mol%) | S | 0.0 | 0.0 | 0.0 | 0.0 | 0.0 | 0.0 | 0.0 |
| | Se | 0.0 | 0.0 | 0.0 | 0.0 | 0.0 | 0.0 | 0.0 |
| | Te | 73.9 | 71.9 | 48.0 | 38.0 | 28.0 | 82.0 | 88.0 |
| | Sn | 5.0 | 5.0 | 9.0 | 7.0 | 6.8 | 11.0 | 6.0 |
| | Ag | 2.5 | 5.0 | 9.0 | 13.5 | 14.0 | 2.0 | 2.0 |
| | Ge | 9.0 | 8.7 | 3.5 | 2.5 | 1.5 | 5.0 | 4.0 |
| | Ga | 9.6 | 9.4 | 30.5 | 39.0 | 49.7 | 0.0 | 0.0 |
| | Cl | 0.0 | 0.0 | 0.0 | 0.0 | 0.0 | 0.0 | 0.0 |
| | I | 0.0 | 0.0 | 0.0 | 0.0 | 0.0 | 0.0 | 0.0 |
| S+Se+Te | | 73.9 | 71.9 | 48.0 | 38.0 | 28.0 | 82.0 | 88.0 |
| Te+Sn | | 78.9 | 76.9 | 57.0 | 45.0 | 34.8 | 93.0 | 94.0 |
| Sn+Ag | | 7.5 | 10.0 | 18.0 | 20.5 | 20.8 | 13.0 | 8.0 |
| Sn/(Sn+Ag) | | 0.67 | 0.50 | 0.50 | 0.34 | 0.33 | 0.85 | 0.75 |
| Ag/(Sn+Ag) | | 0.33 | 0.50 | 0.50 | 0.66 | 0.67 | 0.15 | 0.25 |
| Ge+Sn | | 14.0 | 13.7 | 12.5 | 9.5 | 8.3 | 16.0 | 10.0 |
| (Ge+Sn)/(S+Se+Te) | | 0.19 | 0.19 | 0.26 | 0.25 | 0.30 | 0.20 | 0.11 |
| (Ge+Sn)/Te | | 0.19 | 0.19 | 0.26 | 0.25 | 0.30 | 0.20 | 0.11 |
| Ga/(S+Se+Te) | | 0.13 | 0.13 | 0.64 | 1.03 | 1.78 | 0.00 | 0.00 |
| Ga/Te | | 0.13 | 0.13 | 0.64 | 1.03 | 1.78 | 0.00 | 0.00 |
| Ge+Ga | | 18.6 | 18.1 | 34.0 | 41.5 | 51.2 | 5.0 | 4.0 |
| (Ge+Ga)/(S+Se+Te) | | 0.25 | 0.25 | 0.71 | 1.09 | 1.83 | 0.06 | 0.05 |
| (Ge+Ga)/Te | | 0.25 | 0.25 | 0.71 | 1.09 | 1.83 | 0.06 | 0.05 |
| Cl+1 | | 0.0 | 0.0 | 0.0 | 0.0 | 0.0 | 0.0 | 0.0 |
| Refractive index n10 | | 3.56 | 3.55 | 2.84 | 2.73 | 2.54 | 3.38 | 3.50 |
| Abbe number v10 | | 220 | 224 | 221 | 230 | 225 | 222 | 228 |
| Infrared absorption edge wavelength ($\mu$m) | | 26.1 | 26.0 | 26.0 | 26.0 | 26.0 | 26.0 | 26.0 |
| Internal transmittance (%) at wavelength 10$\mu$m | | 96.1 | 96.6 | 99.8 | 99.8 | 99.8 | 82.0 | 81.0 |
| Volume resistivity log$\rho$ ($\Omega$cm) | | 4.2 | 4.2 | 5.5 | 5.6 | 5.5 | 2.5 | 2.4 |
| Tg (°C) | | 149 | 150 | 150 | 150 | 150 | 150 | 150 |
| $\Delta$T (°C) | | 74 | 77 | 71 | 71 | 70 | 70 | 71 |
| Vitrification | | A | A | A | A | A | A | A |

[Table 2]

| | | Example 8 | Example 9 | Example 10 | Example 11 | Example 12 | Example 13 | Example 14 |
|---|---|---|---|---|---|---|---|---|
| Glass composition (mol%) | S | 0.0 | 0.0 | 0.0 | 0.0 | 0.0 | 0.0 | 0.0 |
| | Se | 0.0 | 0.0 | 0.0 | 0.0 | 0.0 | 0.0 | 0.0 |
| | Te | 89.0 | 78.0 | 77.0 | 80.0 | 80.0 | 77.0 | 75.0 |
| | Sn | 4.0 | 0.5 | 0.5 | 1.0 | 4.0 | 22.0 | 18.0 |
| | Ag | 4.0 | 0.5 | 0.5 | 1.0 | 2.0 | 0.5 | 2.0 |
| | Ge | 3.0 | 21.0 | 22.0 | 18.0 | 13.0 | 0.5 | 2.0 |
| | Ga | 0.0 | 0.0 | 0.0 | 0.0 | 1.0 | 0.0 | 3.0 |
| | Cl | 0.0 | 0.0 | 0.0 | 0.0 | 0.0 | 0.0 | 0.0 |
| | I | 0.0 | 0.0 | 0.0 | 0.0 | 0.0 | 0.0 | 0.0 |
| S+Se+Te | | 89.0 | 78.0 | 77.0 | 80.0 | 80.0 | 77.0 | 75.0 |
| Te+Sn | | 93.0 | 78.5 | 77.5 | 81.0 | 84.0 | 99.0 | 93.0 |
| Sn+Ag | | 8.0 | 1.0 | 1.0 | 2.0 | 6.0 | 22.5 | 20.0 |
| Sn/(Sn+Ag) | | 0.50 | 0.50 | 0.50 | 0.50 | 0.67 | 0.98 | 0.90 |
| Ag/(Sn+Ag) | | 0.50 | 0.50 | 0.50 | 0.50 | 0.33 | 0.02 | 0.10 |
| Ge+Sn | | 7.0 | 21.5 | 22.5 | 19.0 | 17.0 | 22.5 | 20.0 |
| (Ge+Sn)/(S+Se+Te) | | 0.08 | 0.28 | 0.29 | 0.24 | 0.21 | 0.29 | 0.27 |
| (Ge+Sn)/Te | | 0.08 | 0.28 | 0.29 | 0.24 | 0.21 | 0.29 | 0.27 |
| Ga/(S+Se+Te) | | 0.00 | 0.00 | 0.00 | 0.00 | 0.01 | 0.00 | 0.04 |
| Ga/Te | | 0.00 | 0.00 | 0.00 | 0.00 | 0.01 | 0.00 | 0.04 |
| Ge+Ga | | 3.0 | 21.0 | 22.0 | 18.0 | 14.0 | 0.5 | 5.0 |
| (Ge+Ga)/(S+Se+Te) | | 0.03 | 0.27 | 0.29 | 0.23 | 0.18 | 0.01 | 0.07 |
| (Ge+Ga)/Te | | 0.03 | 0.27 | 0.29 | 0.23 | 0.18 | 0.01 | 0.07 |
| Cl+1 | | 0.0 | 0.0 | 0.0 | 0.0 | 0.0 | 0.0 | 0.0 |
| Refractive index n10 | | 3.56 | 3.27 | 3.25 | 3.32 | 3.34 | 3.25 | 3.24 |
| Abbe number v10 | | 224 | 223 | 230 | 223 | 227 | 227 | 229 |
| Infrared absorption edge wavelength ($\mu$m) | | 26.0 | 26.0 | 26.0 | 26.0 | 26.0 | 26.0 | 26.0 |
| Internal transmittance (%) at wavelength 10$\mu$m | | 81.0 | 95.0 | 97.5 | 95.0 | 92.1 | 78.0 | 78.3 |
| Volume resistivity logp ($\Omega$cm) | | 2.4 | 4.1 | 4.4 | 4.0 | 3.4 | 2.0 | 2.1 |
| Tg (°C) | | 150 | 150 | 149 | 149 | 150 | 150 | 150 |
| $\Delta$T (°C) | | 71 | 72 | 72 | 72 | 72 | 71 | 71 |
| Vitrification | | A | A | A | A | A | A | A |

[Table 3]

| | | Example 15 | Example 16 | Example 17 | Example 18 | Example 19 | Example 20 | Example 21 |
|---|---|---|---|---|---|---|---|---|
| Glass composition (mol%) | S | 0.0 | 0.0 | 0.0 | 0.0 | 0.0 | 0.0 | 0.0 |
| | Se | 0.0 | 0.0 | 0.0 | 0.0 | 0.0 | 0.0 | 0.0 |
| | Te | 63.0 | 72.0 | 77.0 | 73.2 | 72.2 | 71.3 | 77.0 |
| | Sn | 5.0 | 4.0 | 6.3 | 1.2 | 2.5 | 3.8 | 2.5 |
| | Ag | 1.5 | 11.0 | 2.5 | 2.6 | 2.6 | 2.5 | 2.5 |
| | Ge | 6.5 | 8.5 | 9.1 | 10.9 | 10.8 | 10.6 | 12.9 |
| | Ga | 23.0 | 3.5 | 5.1 | 12.1 | 11.9 | 11.8 | 5.1 |
| | Cl | 1.0 | 0.0 | 0.0 | 0.0 | 0.0 | 0.0 | 0.0 |
| | I | 0.0 | 1.0 | 0.0 | 0.0 | 0.0 | 0.0 | 0.0 |
| S+Se+Te | | 63.0 | 72.0 | 77.0 | 73.2 | 72.2 | 71.3 | 77.0 |
| Te+Sn | | 68.0 | 76.0 | 83.3 | 74.4 | 74.7 | 75.1 | 79.5 |
| Sn+Ag | | 6.5 | 15.0 | 8.8 | 3.8 | 5.1 | 6.3 | 5.0 |
| Sn/(Sn+Ag) | | 0.77 | 0.27 | 0.72 | 0.32 | 0.49 | 0.60 | 0.50 |
| Ag/(Sn+Ag) | | 0.23 | 0.73 | 0.28 | 0.68 | 0.51 | 0.40 | 0.50 |
| Ge+Sn | | 11.5 | 12.5 | 15.4 | 12.1 | 13.3 | 14.4 | 15.4 |
| (Ge+Sn)/(S+Se+Te) | | 0.18 | 0.17 | 0.20 | 0.17 | 0.18 | 0.20 | 0.20 |
| (Ge+Sn)/Te | | 0.18 | 0.17 | 0.20 | 0.17 | 0.18 | 0.20 | 0.20 |
| Ga/(S+Se+Te) | | 0.37 | 0.05 | 0.07 | 0.17 | 0.16 | 0.17 | 0.07 |
| Ga/Te | | 0.37 | 0.05 | 0.07 | 0.17 | 0.16 | 0.17 | 0.07 |
| Ge+Ga | | 29.5 | 12.0 | 14.2 | 23.0 | 22.7 | 22.4 | 18.0 |
| (Ge+Ga)/(S+Se+Te) | | 0.47 | 0.17 | 0.18 | 0.31 | 0.31 | 0.31 | 0.23 |
| (Ge+Ga)/Te | | 0.47 | 0.17 | 0.18 | 0.31 | 0.31 | 0.31 | 0.23 |
| Cl+1 | | 1.0 | 1.0 | 0.0 | 0.0 | 0.0 | 0.0 | 0.0 |
| Refractive index n10 | | 2.99 | 3.36 | 3.22 | 3.20 | 3.18 | 3.29 | 3.29 |
| Abbe number v10 | | 227 | 229 | 230 | 222 | 221 | 229 | 223 |
| Infrared absorption edge wavelength ($\mu$m) | | 26.0 | 26.0 | 26.0 | 26.0 | 26.0 | 26.0 | 26.0 |
| Internal transmittance (%) at wavelength 10$\mu$m | | 99.7 | 99.8 | 90.0 | 97.4 | 96.1 | 95.4 | 95.2 |
| Volume resistivity log$\rho$ ($\Omega$cm) | | 5.4 | 5.5 | 3.1 | 4.4 | 4.1 | 4.0 | 4.0 |
| Tg (°C) | | 149 | 149 | 150 | 149 | 149 | 149 | 150 |
| $\Delta$T (°C) | | 71 | 71 | 70 | 72 | 72 | 72 | 71 |
| Vitrification | | A | A | A | A | A | A | A |

[Table 4]

| | | Example 22 | Example 23 | Example 24 | Example 25 | Example 26 | Example 27 | Example 28 |
|---|---|---|---|---|---|---|---|---|
| Glass composition (mol%) | S | 0.0 | 0.0 | 0.5 | 1.0 | 1.2 | 0.0 | 0.0 |
| | Se | 0.0 | 0.0 | 0.0 | 0.0 | 0.0 | 0.5 | 1.0 |
| | Te | 77.0 | 77.0 | 76.5 | 72.2 | 71.0 | 76.5 | 72.2 |
| | Sn | 3.8 | 5.0 | 6.3 | 1.2 | 2.5 | 6.3 | 1.2 |
| | Ag | 2.5 | 2.5 | 2.5 | 2.6 | 2.6 | 2.5 | 2.6 |
| | Ge | 11.6 | 10.4 | 9.1 | 10.9 | 10.8 | 9.1 | 10.9 |
| | Ga | 5.1 | 5.1 | 5.1 | 12.1 | 11.9 | 5.1 | 12.1 |
| | Cl | 0.0 | 0.0 | 0.0 | 0.0 | 0.0 | 0.0 | 0.0 |
| | I | 0.0 | 0.0 | 0.0 | 0.0 | 0.0 | 0.0 | 0.0 |
| S+Se+Te | | 77.0 | 77.0 | 77.0 | 73.2 | 72.2 | 77.0 | 73.2 |
| Te+Sn | | 80.8 | 82.0 | 82.8 | 73.4 | 73.5 | 82.8 | 73.4 |
| Sn+Ag | | 6.3 | 7.5 | 8.8 | 3.8 | 5.1 | 8.8 | 3.8 |
| Sn/(Sn+Ag) | | 0.60 | 0.67 | 0.72 | 0.32 | 0.49 | 0.72 | 0.32 |
| Ag/(Sn+Ag) | | 0.40 | 0.33 | 0.28 | 0.68 | 0.51 | 0.28 | 0.68 |
| Ge+Sn | | 15.4 | 15.4 | 15.4 | 12.1 | 13.3 | 15.4 | 12.1 |
| (Ge+Sn)/(S+Se+Te) | | 0.20 | 0.20 | 0.20 | 0.17 | 0.18 | 0.20 | 0.17 |
| (Ge+Sn)/Te | | 0.20 | 0.20 | 0.20 | 0.17 | 0.19 | 0.20 | 0.17 |
| Ga/(S+Se+Te) | | 0.07 | 0.07 | 0.07 | 0.17 | 0.16 | 0.07 | 0.17 |
| Ga/Te | | 0.07 | 0.07 | 0.07 | 0.17 | 0.17 | 0.07 | 0.17 |
| Ge+Ga | | 16.7 | 15.5 | 14.2 | 23.0 | 22.7 | 14.2 | 23.0 |
| (Ge+Ga)/(S+Se+Te) | | 0.22 | 0.20 | 0.18 | 0.31 | 0.31 | 0.18 | 0.31 |
| (Ge+Ga)/Te | | 0.22 | 0.20 | 0.19 | 0.32 | 0.32 | 0.19 | 0.32 |
| Cl+1 | | 0.0 | 0.0 | 0.0 | 0.0 | 0.0 | 0.0 | 0.0 |
| Refractive index n10 | | 3.29 | 3.28 | 3.20 | 3.17 | 3.28 | 3.20 | 3.17 |
| Abbe number v10 | | 221 | 228 | 229 | 230 | 229 | 220 | 224 |
| Infrared absorption edge wavelength ($\mu$m) | | 26.0 | 26.0 | 26.0 | 26.0 | 26.0 | 26.0 | 26.0 |
| Internal transmittance (%) at wavelength 10$\mu$m | | 93.6 | 90.7 | 94.2 | 99.8 | 99.5 | 93.8 | 99.7 |
| Volume resistivity log$\rho$ ($\Omega$cm) | | 3.8 | 3.4 | 3.8 | 5.0 | 4.7 | 3.6 | 4.8 |
| Tg (°C) | | 149 | 150 | 150 | 150 | 149 | 149 | 150 |
| $\Delta$T (°C) | | 71 | 72 | 71 | 72 | 72 | 72 | 71 |
| Vitrification | | A | A | A | A | A | A | A |

[Table 5]

| | | Example 29 | Example 30 | Comparative Example 1 | Comparative Example 2 | Comparative Example 3 |
|---|---|---|---|---|---|---|
| Glass composition (mol%) | S | 0.0 | 0.0 | 0.0 | 0.0 | 0.0 |
| | Se | 1.2 | 0.0 | 0.0 | 0.0 | 0.0 |
| | Te | 71.0 | 71.9 | 75.8 | 77.5 | 38.0 |
| | Sn | 2.5 | 1.5 | 5.0 | 0.0 | 5.0 |
| | Ag | 2.6 | 2.8 | 0.0 | 2.5 | 0.0 |
| | Ge | 10.8 | 12.5 | 9.4 | 15.0 | 52.0 |
| | Ga | 11.9 | 11.3 | 9.8 | 5.0 | 5.0 |
| | Cl | 0.0 | 0.0 | 0.0 | 0.0 | 0.0 |
| | I | 0.0 | 0.0 | 0.0 | 0.0 | 0.0 |
| S+Se+Te | | 72.2 | 71.9 | 75.8 | 77.5 | 38.0 |
| Te+Sn | | 73.5 | 73.4 | 80.8 | 77.5 | 43.0 |
| Sn+Ag | | 5.1 | 4.3 | 5.0 | 2.5 | 5.0 |
| Sn/(Sn+Ag) | | 0.49 | 0.35 | 1.00 | 0.00 | 1.00 |
| Ag/(Sn+Ag) | | 0.51 | 0.65 | 0.00 | 1.00 | 0.00 |
| Ge+Sn | | 13.3 | 14.0 | 14.4 | 15.0 | 57.0 |
| (Ge+Sn)/(S+Se+Te) | | 0.18 | 0.19 | 0.19 | 0.19 | 1.50 |
| (Ge+Sn)/Te | | 0.19 | 0.19 | 0.19 | 0.19 | 1.50 |
| Ga/(S+Se+Te) | | 0.16 | 0.16 | 0.13 | 0.06 | 0.13 |
| Ga/Te | | 0.17 | 0.16 | 0.13 | 0.06 | 0.13 |
| Ge+Ga | | 22.7 | 23.8 | 19.2 | 20.0 | 57.0 |
| (Ge+Ga)/(S+Se+Te) | | 0.31 | 0.33 | 0.25 | 0.26 | 1.50 |
| (Ge+Ga)/Te | | 0.32 | 0.33 | 0.25 | 0.26 | 1.50 |
| Cl+1 | | 0.0 | 0.0 | 0.0 | 0.0 | 0.0 |
| Refractive index n10 | | 3.22 | 3.42 | 3.59 | 3.46 | - |
| Abbe number v10 | | 221 | 226 | 222 | 257 | - |
| Infrared absorption edge wavelength ($\mu$m) | | 26.0 | 26.1 | 25.9 | 26.1 | - |
| Internal transmittance (%) at wavelength 10$\mu$m | | 98.2 | 98.1 | 94.3 | 97.0 | - |
| Volume resistivity log$\rho$ ($\Omega$cm) | | 4.5 | 4.4 | 3.9 | 4.3 | - |
| Tg (°C) | | 150 | 171 | 148 | 155 | - |
| $\Delta$T(°C) | | 72 | 102 | 69 | 87 | - |
| Vitrification | | A | A | A | A | D |

Examples 1 to 30 and Comparative Examples 1 to 3 were prepared as follows. First, a quartz glass ampoule was evacuated while being heated, and then raw materials were mixed to have the glass compositions shown in Tables 1 to 5 and charged into the quartz glass ampoule. Next, the quartz glass ampoule was sealed with an oxygen burner. Next, the sealed quartz glass ampoule was charged into a melting furnace, and the temperature was raised to 650°C to 1000°C at a rate of 10°C/h to 40°C/h, and then held for 6 hours to 12 hours. During the holding time, the quartz glass ampoule was turned upside down and the melt was stirred. Finally, the quartz glass ampoule was taken out of the melting furnace and rapidly cooled to room temperature to obtain a sample. For the obtained sample, the refractive index, the Abbe number, the infrared absorption edge wavelength, the internal transmittance at a wavelength of 10 $\mu$m, the volume resistivity logp, Tg, and $\Delta$T were determined. In addition, the presence or absence of vitrification of the sample was confirmed, and the sample that was vitrified was marked as A, and the sample that was not vitrified was marked as D.

Using a refractometer, the refractive indices n8, n10, and n12 at wavelengths of 8 $\mu$m, 10 $\mu$m, and 12 $\mu$m were measured. In addition, the Abbe number (v10) at a wavelength of 10 $\mu$m was calculated using the obtained refractive index. The following equation was used for calculation.

$$\text{Abbe number } (v10) = \{(n10\text{-}1)/(n8\text{-}n12)\}$$

Using a sample having a thickness of 2 mm, the internal transmittance in the infrared region was measured to determine the infrared absorption edge wavelength. The infrared absorption edge wavelength was the longest wavelength in the long wavelength side in the infrared region with a wavelength of 1 $\mu$m or more, at which the internal transmittance was 10%. Further, the internal transmittance at a wavelength of 10 $\mu$m is listed in Tables 1 to 5.

The resistance between Al electrodes provided on both surfaces of a sample having a thickness of 2 mm was measured at room temperature, and the volume resistivity was calculated based on the obtained resistance value, the sample thickness, and the Al electrode area. The following equation was used for calculation.

Volume resistivity (Qcm) = resistance value ($\Omega$) between Al electrodes $\times$ Al electrode area (cm$^2$)/sample thickness (cm)

The glass transition temperature Tg and the crystallization temperature Tc were measured using a differential thermal analyzer. In addition, $\Delta$T, as an index of glass stability, was determined based on Tg and Tc. The following equation was used for calculation.

$$\Delta T = Tc\text{-}Tg$$

As is clear from Tables 1 to 5, in Examples 1 to 30, the infrared absorption edge wavelength is 26.0 $\mu$m or more, the Abbe number v10 is 220 or more, $\Delta$T is 70°C or higher, the internal transmittance at a wavelength of 10 $\mu$m is 78.0% or more, and the volume resistivity logp is 2.0 S2cm or more. In Comparative Example 1, $\Delta$T is as lower as 69°C. In Comparative Example 2, the Abbe number v10 is as large as 257. In Comparative Example 3, vitrification does not occur.

INDUSTRIAL APPLICABILITY

The infrared transmitting glass according to the present invention can be suitably used for optical elements such as a filter and a lens for use in infrared sensors, infrared cameras, or the like.

**Claims**

1. An infrared transmitting glass comprising: in mol%, from 25% to 90% of S+Se+Te, from 0.1% to 30% of Sn, from 0.1% to 15% of Ag, and from 1% to 30% of Ge+Sn, wherein (Ge+Sn)/(S+Se+Te) is 0.3 or less.

2. The infrared transmitting glass according to claim 1, further comprising: in mol%, from 0.1% to 30% of Ge.

3. The infrared transmitting glass according to claim 1 or 2, further comprising: in mol%, from 0.1% to 50% of Ga+Sb+Bi.

4. The infrared transmitting glass according to claim 1 or 2, further comprising: in mol%, from 0.1% to 25% of Ga.

5. The infrared transmitting glass according to claim 4, wherein Ga/(S+Se+Te) is 2 or less.

6. The infrared transmitting glass according to claim 1 or 2, further comprising: in mol%, from 0% to 20% of F+Cl+Br+I.

7. The infrared transmitting glass according to claim 1 or 2, which is substantially free of Se and As.

8. The infrared transmitting glass according to claim 1 or 2, wherein an Abbe number is 250 or less.

9. The infrared transmitting glass according to claim 1 or 2, wherein a refractive index at a wavelength of 10 μm is 2.5 or more.

10. The infrared transmitting glass according to claim 1 or 2, wherein an internal transmittance at a wavelength of 10 μm is 70% or more.

11. The infrared transmitting glass according to claim 1 or 2, wherein a volume resistivity at room temperature is $10^{2.0}$ (Ωcm) or more.

12. An optical element comprising: the infrared transmitting glass according to claim 1 or 2.

13. An infrared camera comprising: the optical element according to claim 12.

<table>
<tr><td colspan="2" align="center">**INTERNATIONAL SEARCH REPORT**</td><td>International application No.<br>**PCT/JP2022/043698**</td></tr>
</table>

**A.     CLASSIFICATION OF SUBJECT MATTER**

   *C03C 3/32*(2006.01)i; *C03C 4/10*(2006.01)i; *G02B 1/00*(2006.01)i
   FI:    C03C3/32; C03C4/10; G02B1/00

According to International Patent Classification (IPC) or to both national classification and IPC

**B.     FIELDS SEARCHED**

Minimum documentation searched (classification system followed by classification symbols)

   C03C1/00 -14/00; G02B1/00

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

   INTERGLAD

**C.     DOCUMENTS CONSIDERED TO BE RELEVANT**

| Category* | Citation of document, with indication, where appropriate, of the relevant passages | Relevant to claim No. |
|---|---|---|
| X | JP 2017-137204 A (NIPPON ELECTRIC GLASS CO., LTD.) 10 August 2017 (2017-08-10)<br>   claims 1, 4-5, paragraphs [0001], [0002], [0019], [0031], table 2, example 10 | 1-7, 12-13 |
| X | WO 2020/105719 A1 (NIPPON ELECTRIC GLASS CO., LTD.) 28 May 2020 (2020-05-28)<br>   claims 1-4, 11, paragraphs [0001], [0002], [0004], [0008]-[0012], [0027], [0029], [0034],<br>   [0048]-[0051], [0053]-[0058], tables 1, 2, examples 1-5, 12-14 | 1-10, 12-13 |
| X | JP 2019-048752 A (NIPPON ELECTRIC GLASS CO., LTD.) 28 March 2019 (2019-03-28)<br>   claims 1-4, 6-7, paragraphs [0001], [0002], [0027], [0029], [0038], [0042]-[0047], tables<br>   1, 2, examples 5-8 | 1-13 |
| X | WO 2020/175403 A1 (NIPPON ELECTRIC GLASS CO., LTD.) 03 September 2020<br>(2020-09-03)<br>   claims 1-3, paragraphs [0001], [0002], [0016], [0024], [0032], [0033], [0036]-[0039],<br>   table 1, examples 1-6 | 1-13 |
| X | WO 2017/110500 A1 (NIPPON ELECTRIC GLASS CO., LTD.) 29 June 2017 (2017-06-29)<br>   claims 1-2, 4-5, paragraphs [0001], [0002], [0019], [0031], [0037], table 2, examples 9, 10 | 1-7, 12-13 |

☑ Further documents are listed in the continuation of Box C.          ☑ See patent family annex.

| | |
|---|---|
| *     Special categories of cited documents:<br>"A"   document defining the general state of the art which is not considered<br>        to be of particular relevance<br>"E"   earlier application or patent but published on or after the international<br>        filing date<br>"L"   document which may throw doubts on priority claim(s) or which is<br>        cited to establish the publication date of another citation or other<br>        special reason (as specified)<br>"O"   document referring to an oral disclosure, use, exhibition or other<br>        means<br>"P"   document published prior to the international filing date but later than<br>        the priority date claimed | "T"   later document published after the international filing date or priority<br>        date and not in conflict with the application but cited to understand the<br>        principle or theory underlying the invention<br>"X"   document of particular relevance; the claimed invention cannot be<br>        considered novel or cannot be considered to involve an inventive step<br>        when the document is taken alone<br>"Y"   document of particular relevance; the claimed invention cannot be<br>        considered to involve an inventive step when the document is<br>        combined with one or more other such documents, such combination<br>        being obvious to a person skilled in the art<br>"&"   document member of the same patent family |

| Date of the actual completion of the international search | Date of mailing of the international search report |
|---|---|
| **25 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/043698**

C.    DOCUMENTS CONSIDERED TO BE RELEVANT

| Category* | Citation of document, with indication, where appropriate, of the relevant passages | Relevant to claim No. |
|-----------|-----------------------------------------------------------------------------------|----------------------|
| A | WO 2020/189420 A1 (AGC INC.) 24 September 2020 (2020-09-24)<br>entire text, all drawings | 1-13 |
| A | WO 2017/086227 A1 (ASAHI GLASS CO., LTD.) 26 May 2017 (2017-05-26)<br>entire text, all drawings | 1-13 |
| A | JP 2021-056271 A (NIPPON ELECTRIC GLASS CO., LTD.) 08 April 2021 (2021-04-08)<br>entire text, all drawings | 1-13 |

Form PCT/ISA/210 (second sheet) (January 2015)

INTERNATIONAL SEARCH REPORT

Information on patent family members

International application No.

**PCT/JP2022/043698**

| Patent document cited in search report | | | Publication date (day/month/year) | Patent family member(s) | | | Publication date (day/month/year) |
|---|---|---|---|---|---|---|---|
| JP | 2017-137204 | A | 10 August 2017 | (Family: none) | | | |
| WO | 2020/105719 | A1 | 28 May 2020 | (Family: none) | | | |
| JP | 2019-048752 | A | 28 March 2019 | US | 2020/0189964 | A1 | |
| | | | | claims 1-4, 6-7, paragraphs [0001], [0002], [0027], [0029], [0038], [0041]-[0045], tables 1, 2, examples no. 5-8 | | | |
| | | | | WO | 2019/054145 | A1 | |
| | | | | EP | 3683196 | A1 | |
| | | | | CN | 111094201 | A | |
| WO | 2020/175403 | A1 | 03 September 2020 | US | 2022/0144687 | A1 | |
| | | | | claims 1-3, paragraphs [0001], [0002], [0016], [0024], [0032]-[0036], table 1, examples 1-6 | | | |
| | | | | EP | 3932883 | A1 | |
| | | | | CN | 113302164 | A | |
| WO | 2017/110500 | A1 | 29 June 2017 | (Family: none) | | | |
| WO | 2020/189420 | A1 | 24 September 2020 | CN | 113646272 | A | |
| WO | 2017/086227 | A1 | 26 May 2017 | US | 2018/0257977 | A1 | |
| | | | | whole document | | | |
| | | | | EP | 3378844 | A1 | |
| | | | | CN | 108290773 | A | |
| JP | 2021-056271 | A | 08 April 2021 | WO | 2021/059622 | A1 | |
| | | | | whole document | | | |

Form PCT/ISA/210 (patent family annex) (January 2015)

**REFERENCES CITED IN THE DESCRIPTION**

**Patent documents cited in the description**

- WO 2017086227 A